# EUROPÄISCHE PATENTSCHRIFT

(11) **EP 4 360 322 B1**
(45) Veröffentlichungstag und Bekanntmachung des Hinweises auf die Patenterteilung: **15.07.2026**
(21) Anmeldenummer: 22744640.8
(22) Anmeldetag: 30.06.2022
(51) Int. Cl.: H04N 21/218, H04N 21/258, H04N 21/6583, H04N 21/6547, H04N 21/433, H04N 21/414, H04L 67/06, H04N 21/61, H04L 67/1097, H04N 21/442, H04N 21/24, H04L 65/612, H04L 67/104, H04L 9/40, H04L 67/02

(54) **VERFAHREN ZUR ÜBERTRAGUNG VON MEDIADATEIEN VON ZUMINDEST EINER ZENTRALEN SERVERVORRICHTUNG AUF EINE MEHRZAHL VON EMPFANGSGERÄTEN ÜBER EIN DIGITALES NETZWERK**
METHOD FOR TRANSMITTING MEDIA FILES FROM AT LEAST ONE CENTRAL SERVER APPARATUS TO A PLURALITY OF RECEIVING DEVICES VIA A DIGITAL NETWORK
PROCÉDÉ POUR TRANSMETTRE DES FICHIERS MULTIMÉDIA DEPUIS AU MOINS UN APPAREIL SERVEUR CENTRAL VERS UNE PLURALITÉ DE DISPOSITIFS RÉCEPTEURS PAR L'INTERMÉDIAIRE D'UN RÉSEAU NUMÉRIQUE

(30) Priorität: 03.07.2021 CH 0700152021
(43) Veröffentlichungstag der Anmeldung: 01.05.2024
(73) Patentinhaber: Jörg, Thomas, 8057 Zürich (CH)
(72) Erfinder: Jörg, Thomas, 8057 Zürich (CH)
(74) Vertreter: Lichtnecker, Markus Christoph
(86) Internationale Anmeldenummer: PCT/CH2022/050014
(87) Internationale Veröffentlichungsnummer: WO 2023/279214

(56) Entgegenhaltungen:
- EP-A2- 1 193 920
- JP-A- 2006 053 633
- US-A1- 2009 094 253
- US-A1- 2010 064 005
- US-A1- 2012 278 728
- US-A1- 2021 021 668
- STEFAN LEDERER ET AL: "Towards peer-assisted dynamic adaptive streaming over HTTP", PACKET VIDEO WORKSHOP (PV), 2012 19TH INTERNATIONAL, IEEE, 10 May 2012 (2012-05-10), pages 161 - 166, XP032451758, ISBN: 978-1-4673-0299-9, DOI: 10.1109/PV.2012.6229730
- REHAN MOHAMED M ET AL: "Dynamic peer-assisted DASH framework using dynamic updates and prioritization scheme", 2016 IEEE CANADIAN CONFERENCE ON ELECTRICAL AND COMPUTER ENGINEERING (CCECE), IEEE, 15 May 2016 (2016-05-15), pages 1 - 6, XP032988990, DOI: 10.1109/CCECE.2016.7726797

## Beschreibung

### GEBIET DER ERFINDUNG

Die Erfindung betrifft ein Verfahren zur Übertragung von Mediadateien von zumindest einer zentralen Servervorrichtung auf eine Mehrzahl von Empfangsgeräten über ein digitales Netzwerk. Die Erfindung betrifft insbesondere ein Verfahren und eine Vorrichtung zur Distribution von Kinofilmen über ein digitales Netzwerk.

### TECHNISCHER HINTERGRUND

Bei der Verteilung von Mediadateien von einer zentralen Distributionsstelle an eine Mehrzahl von Empfängern, wie beispielsweise im Falle von Kinofilmen von einem Verleiher an unterschiedliche Kinostandorte, wurden die entsprechenden Mediadateien traditionell mittels Kurier in physischer Form versandt. Im Falle von Kinofilmen handelte es sich dabei um klassische Filmkopien, die auf entsprechend großen Filmrollen befördert wurden. In Anbetracht der Größe und des Gewichts der Filmkopien, der zu überbrückenden Entfernungen und des Zeitdrucks war die dahinterstehende Logistik durchaus anspruchsvoll, insbesondere dann, wenn zusätzlich noch widrige Wetterbedingungen hinzukamen.

Eine erste Verbesserung ergab sich im Rahmen der Digitalisierung von Kinos, die es möglich machte, die entsprechenden Dateien mit deutlich geringerem Platzbedarf und deutlich reduzierten Gewichten auf Festplatten zu speichern, und diese zwischen den Standorten zu transportieren. Der Termindruck und die zu überbrückenden Entfernungen blieben dadurch jedoch unberührt.

Zwischenzeitlich ist es durch die Ausweitung der Bandbreiten der allgemein verfügbaren Datennetzwerke (wie beispielsweise dem Internet), und insbesondere auch der weitgehend flächendeckenden Verfügbarkeit von schnellen Endanschlüssen (der sogenannten "letzten Meile") möglich geworden, die Daten auch nicht-physisch in digitaler Form über Netzwerke zu verteilen. Insbesondere wurde diese Art der Medienübermittlung über die Jahre hinweg auch in wirtschaftlicher Hinsicht zunehmend interessanter.

Aufgrund der Kodierung der im Kinobereich zu übertragenen Bilddaten (meist in Form sogenannter DCPs = digital cinema package) mit typischen Dateigrößen im Bereich von 100 GB bis 500 GB stoßen jedoch auch heutige Netzwerke nach wie vor an ihre Grenzen. Auch mit schnellen Endanschlüssen sind Übertragungszeiten von Mediadateien im Bereich von mehreren Stunden bis hin zu einem halben Tag nicht ungewöhnlich.

Ein weiteres Problem entsteht senderseitig, da entsprechend leistungsstarke Serverstandorte mit entsprechend großen Übertragungskapazitäten bereitgestellt werden müssen, um die Datenströme senderseitig bereitzustellen. Im Falle von mehreren hundert Empfängerstandorten (Kinostandorten) ist dies auch heute noch ein kostenintensives Unterfangen. Problematisch ist darüber hinaus die Ausfallsicherheit des Systems. Denn wenn ein zentraler Serverstandort ausfällt (wenn auch nur temporär), wird das gesamte Verteilungssystem infrage gestellt. Will man eine Redundanz durch die Verwendung mehrerer Serverstandorte herstellen, so multiplizieren sich die Kosten auf Anbieterseite entsprechend.

STEFAN LEDERER ET AL, "Towards peer-assisted dynamic adaptive streaming over HTTP", PACKET VIDEO WORKSHOP (PV), 2012 19TH INTERNATIONAL, IEEE, (2012-05-10), doi:10.1109/PV.2012.6229730, ISBN 978-1-4673-0299-9, Seiten 161 - 166, XP032451758 offenbart ein Verfahren gemäß dem Oberbegriff des Anspruchs 1.

REHAN MOHAMED M ET AL, "Dynamic peer-assisted DASH framework using dynamic updates and prioritization scheme", 2016 IEEE CANADIAN CONFERENCE ON ELECTRICAL AND COMPUTER ENGINEERING (CCECE), IEEE, (2016-05-15), doi:10.1109/CCECE.2016.7726797, Seiten 1 - 6, XP032988990 offenbart ein wiederholtes Herunterladen während einer laufenden Übertragung.

EP 1 193 920 A2 offenbart ein Verfahren, bei dem Daten gemäß dem Best-Effort-Prinzip übertragen werden können.

US 2010/064005 A1 offenbart ein Verfahren zum Übertragen von Werbung. Daten werden im Anschluss an die Übertragung der Werbung an den Server übertragen.

Es ist die Aufgabe der vorliegenden Erfindung, ein Verfahren zur Übertragung von Mediadateien von zumindest einer zentralen Servervorrichtung auf eine Mehrzahl von Empfangsgeräten vorzuschlagen, welches gegenüber bisherigen Verfahren verbessert ist.

### BESCHREIBUNG DER ERFINDUNG

Diese und weitere Aufgaben der Erfindung werden durch das vorgeschlagene Verfahren gelöst.

Es wird ein Verfahren zur Übertragung von Mediadateien von zumindest einer zentralen Servervorrichtung auf eine Mehrzahl von Empfangsgeräten über ein digitales Netzwerk vorgeschlagen. Diese Mehrzahl der Empfangsgeräte weist dabei jeweils ein Speichermittel zur Speicherung von Mediadateien auf. Weiterhin ist zumindest eine zentrale Steuerinstanzvorrichtung vorgesehen, welche ein Speichermittel zur Speicherung von Metadaten der zu übertragenden Mediadateien aufweist. Dabei laden die Empfangsgeräte zumindest vor der Übertragung von Mediadateien die Metadaten der Mediadateien von der zentralen Steuerinstanzvorrichtung herunter. Basierend auf den Metadaten initiieren die Empfangsgeräte eine Übertragung der zu übertragenen Mediadateien von zumindest einer der zentralen Servervorrichtungen und/oder von zumindest einem anderen der Empfangsgeräte. Dabei senden die Empfangsgeräte im Laufe der Übertragung der Mediadateien Statusinformationen an die zentrale Steuerinstanzvorrichtung, die von der zentralen Steuerinstanzvorrichtung dazu verwendet werden, die im Speichermittel der zentralen Steuerinstanzvorrichtung gespeicherten Metadaten zu aktualisieren. Die Metadaten umfassen Informationen darüber, welche der Mediadateien an welches Empfangsgerät oder an welche Empfangsgeräte zu übertragen sind.

Die Mediadateien sind Digital Cinema Packages (DCPs).

Bei der zentralen Servervorrichtung kann es sich insbesondere um typische Rechenzentren, bzw. Datenzentren handeln, bei denen eine große Anzahl an Rechnern zu einem Verbund zusammengekoppelt sind. Derartige Rechenzentren sind in vielen Ländern der Erde mit unterschiedlichen Sicherheitsniveaus zu finden. Sie werden für mannigfaltige Aufgaben eingesetzt, teilweise dezidiert für bestimmte Aufgaben, teilweise für universelle Aufgaben. Bei den Empfangsgeräten kann es sich insbesondere um elektronische Computer handeln, insbesondere solche, die aus typischen, kommerziell erhältlichen Computerkomponenten zusammengesetzt werden. Auf klassische Peripheriegeräte kann dabei jedoch meist verzichtet werden (wie beispielsweise auf Druckeranschlüsse, Tastaturanschlüsse, Grafikkarten/Grafikkartenanschlüsse und dergleichen). Als Betriebssysteme können Standardbetriebssysteme Verwendung finden, wie beispielsweise Windows-basierte Betriebssysteme oder Unix-basierte Betriebssysteme (zum Beispiel Linux). Als Speichermedien für die im Wesentlichen dauerhafte Datenspeicherung (zu unterscheiden vom Arbeitsspeicher = RAM (random access memory)) können SSDs (solid state disks) oder klassische Festplatten, auch in Kombination, verwendet werden. In Anbetracht der Datengrößen für digitale Mediadateien (insbesondere von sogenannten DCPs = digital cinema package), welche im professionellen Bereich typischerweise zwischen 100 GB und 500 GB liegen, sind die Speichermittel entsprechend groß zu dimensionieren. Sinnvollerweise sollten zumindest 6-8 TB Speicher vorgesehen werden. Zur Erhöhung der Zuverlässigkeit des Systems können die verwendeten Vorrichtungen (Empfangsgeräte, zentrale Servervorrichtung, zentrale Steuerinstanzvorrichtung) mittels einer unterbrechungsfreien Stromversorgung mit Energie versorgt werden. Während typische Rechenzentren üblicherweise ohnehin mittels Generatoren weitgehend dauerhaft mit Strom versorgt werden können (im Fall eines Stromnetzausfalls), erweist es sich aber insbesondere für die Empfangsgeräte als oftmals ausreichend, wenn nur gewisse Zeitdauern unterbrechungsfrei überbrückt werden können (beispielsweise 10 Minuten; die sinnvollerweise zu wählende Zeitdauer hängt dabei von der Zuverlässigkeit des Stromnetzes ab). Bei dem digitalen Netzwerk kann sich grundsätzlich in beliebiger Weise um ein privates Netzwerk, ein öffentliches Netzwerk oder aber auch um ein sogenanntes VPN (virtual private network) handeln. Auch die dabei zur Anwendung kommenden Protokolle - wie beispielsweise TCP/IP (Transmission Control Protocol/Internet Protocol) oder dergleichen - sind grundsätzlich beliebig wählbar. Die zumindest eine zentrale Steuerinstanzvorrichtung kann - muss aber nicht - mit der zumindest einen zentralen Servervorrichtung zusammenfallen. Eine getrennte Ausbildung kann insbesondere Vorteile hinsichtlich der Administrierbarkeit bieten. Die zu übertragenen Mediadateien werden in der Regel wenigstens auf der zumindest einen zentralen Servervorrichtung (initial) vollständig bereitgestellt, sodass die zumindest eine zentrale Servervorrichtung einen Anfangspunkt für die weitere Verteilung bilden kann. Die initiale Bereitstellung der Mediadateien auf der zumindest einen zentralen Servervorrichtung kann dabei physisch erfolgen (beispielsweise durch Anschließen von Festplatten, Laden von Speicherbändern, optischen und magnetoptischen Speichermitteln), aber auch über Netzwerk erfolgen. Es ist darauf hinzuweisen, dass dieses "initiale Versenden" in der Regel nur einmal, gegebenenfalls nur einmal pro zentralem Serverstandort, erforderlich ist, mithin die zu übertragenen Datenvolumen vergleichsweise überschaubar sind. Darüber hinaus handelt es sich in der Regel um Entitäten, die ohnehin Zugang zu Datenleitungen mit sehr breitbandigen Übertragungsraten (Glasfaseranschluss und dergleichen) haben, sodass auch aufgrund der für diese Entitäten verfügbaren Datenübertragungsraten eine schnelle initiale Datenübertragung auf die zumindest eine zentrale Servervorrichtung gegeben ist. Dementsprechend ist es bei der allerersten Anfrage des ersten Empfangsgeräts zum Herunterladen einer bestimmten, neu eingestellten Mediadatei, diesem Empfangsgerät nur möglich, die entsprechende Mediadatei von der zumindest einen zentralen Servervorrichtung zu empfangen. Sobald die Mediadateien jedoch auch auf zumindest einem weiteren der Empfangsgeräte vorhanden sind, kann die entsprechende Mediadatei zusätzlich oder alternativ auch von dem zumindest einen anderen Empfangsgerät empfangen werden. Im Laufe der Zeit wird sich die Anzahl der hierzu verfügbaren Empfangsgeräte entsprechend erhöhen. Insbesondere ist es auch möglich, Daten von einer Mehrzahl von Empfangsgeräten/zentralen Servervorrichtungen gleichzeitig zu empfangen. Im Übrigen ist es auch möglich, dass insbesondere bei populären Filmen ein (im Wesentlichen) ausschließliches Herunterladen von anderen Empfangsgeräten möglich ist. Selbstverständlich ist es auch denkbar, dass ein "initiales Einstellen" einer Mediadatei nicht bzw. nicht nur auf einer zentralen Servervorrichtung, sondern auch/im Wesentlichen ausschließlich/ausschließlich auf einem oder auf mehreren Empfangsgeräten erfolgt (insbesondere dann, wenn es sich um keine zeitkritisch zu verteilenden Mediadateien handelt). Es ist darauf hinzuweisen, dass die betreffenden Mediadateien nicht nur als Ganzes und als ununterbrochener Datenstream von einem Empfangsgerät/einer zentralen Servervorrichtung zum/zur anderen verschickt werden können, sondern diese als Vielzahl gegebenenfalls auch weitgehend voneinander unabhängiger Datenpakete (insbesondere Position des betreffenden Datenpakets innerhalb der Gesamtdatei) versendet werden können. Dies ist bei einer größeren Anzahl von möglichen Datenübertragungsprotokollen ohnehin der Fall. Es ist also möglich, dass beim Empfang einer Mediadatei unterschiedliche Datenpakete (und damit auch unterschiedliche Teile der Mediadatei) von einer Mehrzahl von Ausgangspunkten (zentrale Servervorrichtungen und/oder andere Empfangsgeräte) empfangen werden, die im Empfangsgerät mit grundsätzlich bekannten Algorithmen zur eigentlichen Mediadatei zusammengesetzt werden. Ein großer Vorteil liegt hierbei darin, dass die zentralen Servervorrichtungen in durchaus erheblichem Umfang entlastet werden können, was sich entsprechend kostenreduzierend auswirken kann. Darüber hinaus kann sich auch die Ausfallsicherheit des Gesamtverfahrens bzw. des Gesamtsystems erhöhen, weil beispielsweise der Ausfall der zentralen Servervorrichtung (bzw. der zentralen Servervorrichtungen, oder Teilen hiervon) zumindest über einen gewissen Zeitraum hinweg durch das Netz aus unterschiedlichen Empfangsgeräten ausgeglichen werden kann (wenn man von extrem ungünstigen Zeitpunkten des Ausfalls der zentralen Servervorrichtung/der zentralen Servervorrichtungen absieht). Weiterhin senden die Empfangsgeräte beim vorgeschlagenen Verfahren im Laufe der Übertragung der Mediadateien Statusinformationen an die zentrale Steuerinstanzvorrichtung, wobei diese Statusinformationen von der zentralen Steuerinstanzvorrichtung dazu verwendet werden, die im Speichermittel der zentralen Steuerinstanzvorrichtung gespeicherten Metadaten zu aktualisieren. Da die betreffenden Statusinformationen nur vergleichsweise kleine Datenmengen umfassen, sind die betreffenden Datenmengen im Verhältnis zum Datenstrom der eigentlichen Mediadateien weitgehend vernachlässigbar. Dementsprechend kann eine derartige Statusinformation problemlos in kleinen Zeiträumen, wie beispielsweise jede Sekunde oder im Abstand von einigen wenigen Sekunden (beispielsweise 5 Sekunden, 10 Sekunden, 20 Sekunden, 30 Sekunden), oder aber auch im Abstand von Minuten oder einigen wenigen Minuten übertragen werden, ohne dass dies für das Netzwerk von größerer Relevanz wäre. Es ist darauf hinzuweisen, dass die aktualisierten Metadaten für die Erhöhung der Effizienz der Übertragung von Mediadaten zwar in der Regel förderlich sind (insbesondere im Falle einer neuen Initiierung einer Mediadatei-Übertragung), sie auf die Übertragung der Mediadateien (insbesondere bei bereits begonnenen Mediadatei-Übertragungen) oftmals eine nur vergleichsweise geringe Auswirkung haben, zumindest aber ein Abbruch der Übertragung oftmals vermieden werden kann, zumindest wenn keine übermäßig großen Ausfallzeiten zur Debatte stehen.

Es wird weiterhin vorgeschlagen, dass bei dem vorgeschlagenen Verfahren die Metadaten zudem Informationen umfassen, welche der folgenden Gruppe entnommen sind:
- Informationen bezüglich einer Übertragungspriorität der zu übertragenen Mediadateien;
- Informationen bezüglich eines Übertragungsfortschritts einer in der Übertragung befindlichen Mediadatei und/oder einer Übertragungsgeschwindigkeit einer in der Übertragung befindlichen Mediadatei und/oder eine geschätzten Restübertragungsdauer für die Übertragung einer in der Übertragung befindlichen Mediadatei;
- Informationen bezüglich einer Warteschlangenposition einer zu übertragenden Mediadatei und/oder;
- Informationen bezüglich der Empfangsgeräte, welche am Verfahren zur Übertragung von Mediadateien teilnehmen und/oder hierzu berechtigt sind;
- Informationen bezüglich der Empfangsgeräte, welche zumindest Teile der zu übertragenen Mediadateien in ihrem Speichermittel gespeichert haben, und insbesondere Informationen darüber, welche Teile der zu übertragenden Mediadateien im Speichermittel der jeweiligen Empfängergeräte gespeichert sind;
- Informationen bezüglich des Abschlusses der Übertragung einer Mediadatei;
- Informationen darüber, welche Mediadateien von welchen Empfangsgeräten zu löschen sind.

Es kann dabei eine Art von Information, eine beliebige Teilauswahl der genannten Arten von Informationen, oder auch alle genannten Arten von Informationen verwendet werden. Darüber hinaus ist darauf hinzuweisen, dass die genannte Liste nicht notwendigerweise abschließend ist. Das Vorsehen einer derartigen zentralen Steuerinstanzvorrichtung ist insbesondere für die Erfordernisse bei der Verteilung/Distribution von Mediadateien für Kinos besonders vorteilhaft. Beispielsweise kann durch die Information, welche Empfangsgeräte überhaupt berechtigt sind, am Verfahren zur Übertragung von Mediadateien teilzunehmen, bzw. dies aktuell tun, einerseits die Sicherheit gegenüber Angriffen erhöht werden, andererseits der Protokolloverhead verringert und/oder der Datendurchsatz erhöht werden, da Empfangsgeräte nicht erst bei sämtlichen anderen Empfangsgeräten "blind" anfragen müssen, wo entsprechende Daten zur Verfügung stehen, sondern basierend auf den zentral verfügbaren Informationen unmittelbar eine geeignete Downloadstrategie ermitteln können. Durch die zentrale Steuerinstanzvorrichtung, und insbesondere basierend auf den Informationen, welche Mediadateien an welches Empfangsgerät zu übertragen sind, sowie basierend auf der Übertragungspriorität der zu übertragenen Mediadateien (die natürlich von Empfangsgerät zu Empfangsgerät variieren kann) ist es darüber hinaus beispielsweise für den Verleiher möglich, die Verteilung zunächst auf solche Empfangsgeräte zu beschränken bzw. auf solchen Empfangsgeräten zu priorisieren, wo ein Filmstart mehr oder weniger unmittelbar bevorsteht, bzw. - im Extremfall - eine Liveübertragung vorgesehen ist. Gleichzeitig ist es möglich, durch Vergeben einer entsprechend niedrigen Priorität eventuell verfügbare freie Leitungskapazitäten (Leerlaufkapazitäten) zu nutzen, um beispielsweise einen Film an ein Kino zu übermitteln, bei dem der Filmstart erst in einigen Wochen geplant ist. Auch ist es denkbar, dass insbesondere in letzterem Fall eine Übertragung von Mediadateien zumindest anfänglich darauf beschränkt wird, dass die betreffenden Dateien ausschließlich von anderen Empfangsgeräten bezogen werden (auch wenn dies das Herunterladen der betreffenden Mediadateien verlangsamt). Erst wenn der Aufführungstermin näher rückt können eventuell noch fehlende Teile der Mediadateien von der zumindest einen zentralen Servervorrichtung heruntergeladen werden. Auf diese Weise kann der Datenverkehr mit der zentralen Servervorrichtung besonders effektiv weiter verringert werden. Bei Kinos, bei denen ein Filmstart dagegen überhaupt nicht vorgesehen ist, kann eine Übertragung des Films dagegen unterbunden werden. Durch die Informationen darüber, welche Mediadateien bzw. welcher Anteil von welchen Mediadateien bereits auf welchem Empfangsgerät vorhanden ist, ist es in besonders vorteilhafter Weise möglich, dass Auftraggeber, Empfänger und gegebenenfalls auch weitere interessierte Parteien einen guten Überblick über die aktuelle Übertragungssituation gewinnen können, wobei es auch nicht erforderlich ist, dass die betreffenden Parteien vor Ort sein müssen, d. h. physischen Zugriff auf das betreffende Empfangsgerät haben müssen. Es sollte darauf hingewiesen werden, dass es selbstverständlich auch möglich ist, dass (Teile der) Metadaten von anderen Empfangsgeräten bezogen werden können, insbesondere dann, wenn es zu einem (zeitweisen) Ausfall der zentralen Steuerinstanzvorrichtung(en) kommt.

Weiterhin wird vorgeschlagen, dass die zumindest eine zentrale Steuerinstanzvorrichtung mittels Smartphones, Tablet-Computern, Computern oder portablen Computern aus der Entfernung über das digitale Netzwerk angesteuert werden kann und/oder dass die im Speichermittel der Steuerinstanzvorrichtung befindlichen Metadaten mittels Smartphones, Tablet-Computern, Computern oder portablen Computern aus der Entfernung über das digitale Netzwerk ausgelesen werden können. Auf diese Weise ist es nicht erforderlich, dass Auftraggeber, Empfänger, Administrator, weitere interessierte Parteien usw. physischen Zugriff auf die zumindest eine Steuerinstanzvorrichtung, die Empfangsgeräte und/oder die zumindest eine zentrale Servervorrichtung haben müssen. Da die für die Steuerung der Steuerinstanzvorrichtung bzw. für das Auslesen interessierender Informationen der Steuerinstanzvorrichtung nur geringe Datenmengen vonnöten sind, können hierzu nicht nur ein beliebiger stationärer PC, der mit entsprechender Software ausgerüstet ist, genutzt werden. Vielmehr ist es auch möglich, dass eine Steuerung bzw. ein Auslesen von Daten auch mithilfe einer geeigneten App unter Verwendung eines mobilen Tablet-Computers bzw. eines Smartphones, auch über ein Mobilfunknetz, erfolgen kann.

Weiterhin kann es vorgesehen sein, dass bei dem vorgeschlagenen Verfahren die Empfangsgeräte die Metadaten der Mediadateien wiederholend von der zentralen Steuerinstanzvorrichtung herunterladen, insbesondere auch während einer laufenden Übertragung von Mediadateien. Hierbei können einerseits gewisse zeitliche Abstände vorgesehen werden, wie beispielsweise jede Sekunde, im Abstand von einigen wenigen Sekunden (beispielsweise 5 Sekunden, 10 Sekunden, 20 Sekunden, 30 Sekunden), oder aber auch im Abstand von Minuten oder wenigen Minuten (beispielsweise 5 Minuten, 10 Minuten, 20 Minuten, 30 Minuten). Da die Datenmenge der Metadaten verglichen mit der Datenmenge der zu übertragenen Mediadateien äußerst gering ist, sind derartige zeitliche Abfrageintervalle in aller Regel völlig unproblematisch. Zusätzlich oder alternativ ist es auch denkbar, dass eine Abfrage basierend auf prozentual geladenen Anteilen von Mediadateien erfolgt, wie beispielsweise eine Abfrage für jedes Prozent einer Mediadatei, die geladen wurde. Durch die regelmäßige Abfrage der Mediadateien ist es einerseits möglich, dass bei einem Empfangsgerät die aktuelle Downloadstrategie (Herunterladestrategie) optimiert wird. Andererseits ist es auch möglich, dass ein neuer Auftrag zur Übertragung von bestimmten Mediadateien auf ein bestimmtes Empfangsgerät zeitnah erkannt wird, und ohne Benutzereingriff selbsttätig gestartet wird. Letzteres gilt selbstverständlich in analoger Weise auch, falls sich die Priorität für bestimmte Mediadateien ändern sollte. Wie bereits erwähnt ist es durchaus denkbar, dass (Teile der) Metadaten auch von anderen Empfangsgeräten bezogen werden können. Es kann sich also gegebenenfalls um ein "mittelbares" Empfangen der aktuellen Metadaten von der Steuerinstanzvorrichtung handeln. Darüber hinaus kann - wie ebenfalls erwähnt - durch ein Empfangen von (Teilen der) Metadaten von anderen Empfangsgeräten ein temporärer Ausfall der Steuerinstanzvorrichtung(en) überbrückt werden.

Weiterhin wird vorgeschlagen, dass bei dem Verfahren die Empfangsgeräte bei der Übertragung von Mediadateien die Anfänge der betreffenden Mediadateien priorisieren, insbesondere für Mediadateien, welche mit Priorität zu übertragen sind. In diesem Fall ist es möglich, einen Film bereits dann zu starten, wenn beispielsweise die letzten restlichen Prozent der betreffenden Mediadatei noch nicht übertragen sind. Diese letzten restlichen Prozent können in aller Regel noch während der Vorführung nachgeladen werden, sodass schlussendlich eine unterbrechungsfreie Vorführung des Films möglich ist. In diesem Zusammenhang sollte darauf hingewiesen werden, dass es durchaus sinnvoll sein kann, dass speziell bei Mediadateien mit sehr niedriger oder gar keiner Priorität im Gegenteil das Ende der betreffenden Mediadatei bevorzugt geladen wird. Wenn also beispielsweise beim Empfangsgerät eines Kinos, bei dem ein Filmstart erst in zwei Wochen vorgesehen ist, zunächst die letzten 10% der Mediadatei geladen werden, stehen diese letzten 10% der Mediadatei zur Übertragung an ein anderes Empfangsgerät, bei dem der Film bereits aktuell projiziert wird, oder der Filmstart unmittelbar bevorsteht, zur Verfügung. Durch die Erhöhung der Anzahl der Datenquellen "für die letzten 10%" kann die Redundanz des Systems erhöht werden. In diesem Zusammenhang sollte noch ein kurzer Hinweis auf den prinzipiellen Aufbau von sogenannten DPCs (digital cinema package) erfolgen: diese weisen typischerweise einen XML-Header (extended markup language) sowie einen MXF-Header (material exchange format) auf, die sinnvollerweise in jedem Fall als allererstes zu übertragen sind. Dies stellt in aller Regel kein Problem dar, da diese Header üblicherweise nur wenige Kilobyte bis wenige Megabyte Datenvolumen beanspruchen. Diese Header beschreiben den Aufbau der Mediadatei bezüglich der eigentlichen Daten (Frames), welche typischerweise im JPEG2000-Format vorliegen, und den weit überwiegenden Teil der Datenmenge einer Mediadatei ausmachen. Wenn also von den "letzten 10%" einer Mediadatei die Rede ist, so bedeutet dies typischerweise, dass die Header vollständig, sowie die letzten 10% der JPEG2000-Frames vorliegen (wohingegen die ersten 90 % der JPEG2000-Frames fehlen).

Darüber hinaus wird vorgeschlagen, dass bei dem Verfahren zumindest Teile des Netzwerks ein öffentliches Netzwerk sind, und die Datenübertragung vorzugsweise zumindest teilweise mittels verschlüsselter Datenübertragung, besonders vorzugsweise über ein virtuelles privates Netzwerk (VPN; virtual private network) erfolgt. Hierdurch kann vorteilhafterweise auf bereits vorhandene und kostengünstig zur Verfügung stehende Infrastruktur zurückgegriffen werden und dennoch ein hohes Sicherheitsniveau erreicht werden. Insbesondere ist an das Internet zu denken, sowie an typische "letzte Meile"-Endanschlüsse, wie beispielsweise DSL-Anschlüsse, ADSL-Anschlüsse, VDSL-Anschlüsse, Glasfaseranschlüsse, Koaxialkabelanschlüsse (Kabelfernsehen), und dergleichen. (DSL=digital subscriber line; ADSL=asynchronous digital subscriber line; VDSL=vectorial digital subscriber line). Für das vorgeschlagene Verfahren geeignete Datenübertragungsraten beginnen bei typischerweise 16-20 Mbit/s. Dementsprechend ist offensichtlich, dass heutzutage weit verbreitete Endanschlüsse in aller Regel voll ausreichende Datenübertragungsraten bereitstellen. Bei der verschlüsselten Datenübertragung kann beispielsweise auf das HTTPS-Protokoll (hypertext transfer protocol secure) zurückgegriffen werden, oder auf grundsätzlich bekannte interne Verschlüsselungsalgorithmen. Da DPC-Dateien in aller Regel ohnehin verschlüsselt sind, kann man sich aus Performanzgründen in der Regel auf die Verschlüsselung des Datenverkehrs bezüglich der Metadaten beschränken, also insbesondere auf die Datenströme zwischen den Empfangsgeräten und der Steuerinstanzvorrichtung/den Steuerinstanzvorrichtungen, und den betreffenden Anteil der Datenströme zwischen den Empfangsgeräten (also den Anteil der Datenströme, der Metadaten betrifft). Hierdurch kann eine unnötige Überverschlüsselung vermieden werden.

Bei dem Verfahren wird weiterhin vorgeschlagen, dass es sich bei der zumindest einen zentralen Steuerinstanzvorrichtung und/oder der zumindest einen zentralen Servervorrichtung um ein redundantes System handelt derart, dass bei einem Teilausfall des jeweiligen Systems die Funktionalität des Systems von dessen Restkomponenten übernommen werden kann. Hierunter wird in aller Regel eine mehrfache Auslegung des Systems verstanden, wobei beim Ausfall eines Teilsystems automatisch das andere Teilsystem die Aufgaben des ausgefallenen Systems übernimmt. Derartige redundante Systeme sind als solche im Stand der Technik bekannt und verbreitet. Durch eine derartige Auslegung wird die Verfügbarkeit des vorgeschlagenen Verfahrens deutlich erhöht. Insbesondere in dem Fall, in dem (nur) die zentrale Steuerinstanzvorrichtung redundant ausgelegt wird, kann mit vergleichsweise geringem finanziellem Aufwand ein bereits hochgradig ausfalltolerantes System zur Verfügung gestellt werden.

Wenn im Zusammenhang mit der vorliegenden Beschreibung auf einen Standard (beispielsweise Ethernet, FTP, HDMI und dergleichen) Bezug genommen wird, so gilt insbesondere die jeweils aktuelle Definition zum Zeitpunkt des Anmeldetags bzw. Prioritätstags dieser Anmeldung.

### BESCHREIBUNG DER ZEICHNUNGEN

Weitere vorteilhafte Aspekte der Erfindung ergeben sich aus der nachfolgenden Beschreibung von Ausführungsbeispielen der Erfindung unter Bezugnahme auf die Figuren, welche zeigen:
- Fig. 1: ein mögliches Beispiel für ein Mediadateienübertragungsnetzwerk, das beim erfindungsgemäßen Verfahren verwendet werden kann, in einer schematischen Ansicht;
- Fig. 2: ein Empfangsgerät, das beim erfindungsgemäßen Verfahren verwendet werden kann, in einer schematischen Seitenansicht;
- Fig. 3: ein Flussdiagramm für ein mögliches Ausführungsbeispiel zur Realisierung des vorliegenden Verfahrens auf einem Empfangsgerät.

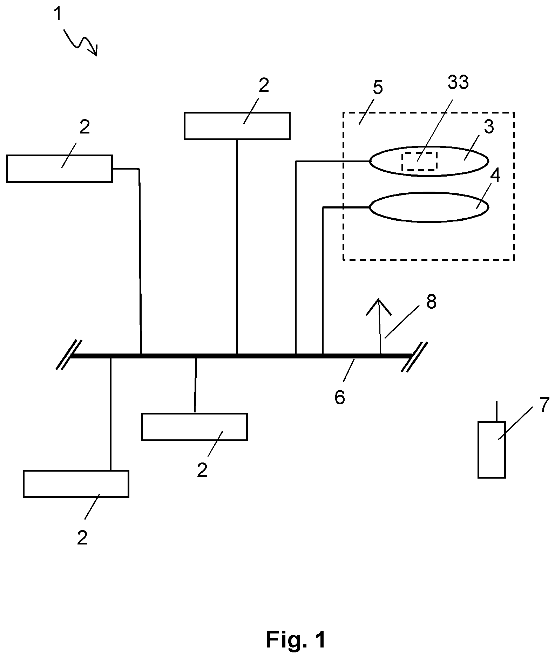

In **Fig. 1** ist ein mögliches Beispiel für ein Mediadateienübertragungsnetzwerk 1 zur Übertragung von Mediadateien in einer schematischen Ansicht dargestellt. Das Mediadateienübertragungsnetzwerk 1 weist eine Mehrzahl von Empfangsgeräten 2 auf, die gemäß vorliegendem Vorschlag - soweit entsprechende Daten vorhanden sind - auch als Sendegerät dienen können, und die dementsprechend auch als kombinierte Sende-/Empfangsgeräte bezeichnet werden könnten. Die Empfangsgeräte 2 haben Zugang zu einem öffentlichen Netzwerk 6, wie beispielsweise dem Internet 6. Die Verbindung zwischen Empfangsgerät 2 und Internet 6 kann dabei entweder unmittelbar oder auch mittelbar, beispielsweise über kommerziell erhältliche Router oder Modems erfolgen. Die Datenübertragungsraten betragen idealerweise mehr als 20 Mb/s im Download betragen, weshalb DSL-Anschlüsse mit Datenübertragungsraten von mindestens 16 Mb/s, vorzugsweise jedoch VDSL-Anschlüsse mit Datenraten von 25 Mb/s, 50 Mb/s, 100 Mb/s oder 250 Mb/s oder dergleichen, oder beispielsweise auch Glasfaseranschlüsse mit beispielsweise Datendurchsatzraten von 500 Mb/s oder 1 Gb/s im Download bevorzugt genutzt werden.

Weiterhin ist eine Steuerinstanzvorrichtung 3, die ein Speichermittel 33 zur Speicherung von Metadaten der zu übertragenden Mediadateien, sowie eine zentrale Servervorrichtung 4, beispielsweise in Form eines Rechenzentrums, mit dem Internet 6 verbunden. Die Steuerinstanzvorrichtung 3 und die zentrale Servervorrichtung 4 können getrennt voneinander ausgebildet sein (beispielsweise durch Anmietung von entsprechenden Kapazitäten in unterschiedlichen Rechenzentren). Es ist aber auch möglich, dass die Steuerinstanzvorrichtung 3 und die zentrale Servervorrichtung 4 als gemeinsame Einheit 5, beispielsweise in einem einzelnen Rechenzentrum, implementiert sind.

Der Vollständigkeit halber sollte darauf hingewiesen werden, dass Steuerinstanzvorrichtung 3 und/oder zentrale Servervorrichtung 4 (bzw. gemeinsame Einheit 5) mehrfach ausgelegt sein können, wodurch vorteilhafterweise eine entsprechende Redundanz realisiert werden kann, sodass die Ausfallsicherheit des Medienübertragungsnetzwerks 1 signifikant erhöht werden kann.

Wie bei öffentlichen Netzwerken, wie insbesondere auch beim Internet 6 üblich, ist es möglich, dass sämtliche angeschlossenen Einheiten grundsätzlich miteinander kommunizieren können, vorliegend also sämtliche Empfangsgeräte 2, die Steuerinstanzvorrichtung 3 und die zentrale Servervorrichtung 4 (bzw. gegebenenfalls die Steuerinstanzvorrichtungen 3 und/oder die zentralen Servervorrichtungen 4).

Weiterhin kann ein Smartphone 7, auf welchem eine geeignete App installiert ist, über einen Mobilfunkzugang 8 (nur schematisch dargestellt) ebenfalls mit dem Internet 6 kommunizieren. Dadurch hat das Smartphone 7 (bzw. die im Smartphone 7 geladene App) insbesondere Zugriff auf die Steuerinstanzvorrichtung 3.

Lediglich der Vollständigkeit halber wird darauf hingewiesen, dass zusätzlich zum, oder anstelle eines Smartphones 7 selbstverständlich auch ein üblicher Computer, oder aber auch ein Rechenzentrum eines Filmverleihers oder dergleichen mit dem Internet 6 verbunden sein kann. Insbesondere ein Rechenzentrum eines Filmverleihers bzw. Filmherstellers hat üblicherweise einen extrem breitbandigen Zugang zum Internet 6. Beim "Rechenzentrum eines Filmverleihers" wird es sich im Übrigen in der Regel um das Rechenzentrum eines von einem Filmverleiher beauftragten Dienstleisters handeln, wie beispielsweise um das Rechenzentrum eines Filmlabs oder dergleichen.

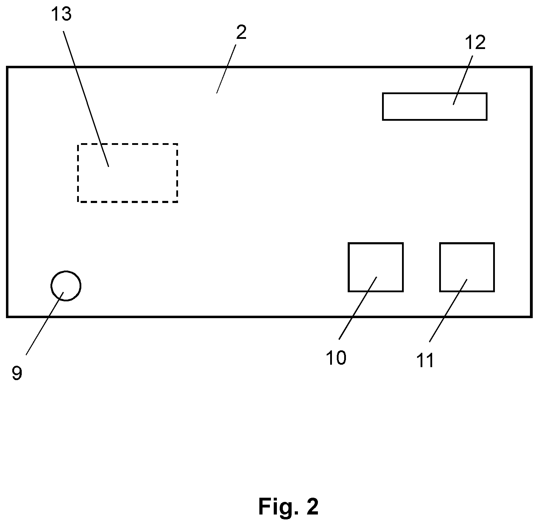

In **Fig. 2** ist ein mögliches Ausführungsbeispiel für ein Empfangsgerät 2 in einer schematischen Seitenansicht dargestellt. Des Empfangsgerät 2 ist als kompaktes Gerät mit einer Mehrzahl von Anschlüssen 9, 10, 11, 12 ausgebildet. Neben einem Stromanschluss 9 (dieser kann beispielsweise als Netzanschluss, oder auch als Anschluss für ein geeignetes Netzteil ausgebildet sein) finden sich insbesondere die Netzwerkzugänge 10, 11, nämlich ein Anschluss für ein externes Netzwerk (WAN=wide area network) 11, der beispielsweise zur Verbindung mit einem Router, einem Modem oder dergleichen dient, sowie ein Anschluss zur Verbindung mit einem internen Netzwerk 10 (LAN=local area network). Dabei ist es durchaus möglich, dass beide Netzwerkanschlüsse 10, 11 auf dem gleichen Netzwerkprotokoll und/oder der gleichen Netzwerkhardware beruhen. Dementsprechend ist es möglich, dass beide Anschlüsse 10, 11 als RJ-45-Steckverbindungen für 1 Gb/s bzw. 10 Gb/s-Ethernet ausgebildet sind.

Der interne Netzwerkanschluss 10 wird üblicherweise mit einem sogenannten Switch (manchmal auch als Patchbox bezeichnet) verbunden. Gegebenenfalls ist es auch sinnvoll, eine Mehrzahl von internen Netzwerkanschlüssen 10 vorzusehen.

Weiterhin ist beim Empfangsgerät 2 eine HDMI-Buchse 12 vorgesehen. Hierbei handelt es sich um einen weitverbreiteten Videoanschlussstandard, der insbesondere auch DRM-Funktionalität aufweist (DRM = digital rights management).

Sämtliche Medieninformationen, insbesondere Streaming-Mediadateien für LIVE-Übertragungen, als auch Mediadateien beispielsweise im DCP-Format (DCP = digital cinema package) werden vom externen Netzwerk 6 (beispielsweise Internet) über den externen Netzwerkanschluss 11 eingelesen. Die interne Weiterleitung erfolgt dagegen typischerweise in Abhängigkeit vom jeweiligen Signal, nämlich für LIVE-Signale typischerweise über die HDMI-Buchse 12. Demgegenüber werden DCP-Dateien meistens erst dann, wenn sie vollständig im Speichermittel 13 (Massenspeicher) des Empfangsgeräts 2 vorhanden sind als vollständige Mediadatei über den internen Netzwerkanschluss 10 beispielsweise auf ein lokales RAID-Laufwerk heruntergeladen.

Es ist darauf hinzuweisen, dass durch das Empfangsgerät 2 und dessen unterschiedliche Netzwerkanschlüsse 10, 11 (bzw. durch die HDMI-Buchse 12) eine logische Trennung (physische Trennung) zwischen lokalem Netzwerk (LAN) und externem Netzwerk (Internet 6, WAN) gegeben ist. Dies kann die Sicherheit gegenüber Hacking-Angriffen deutlich erhöhen.

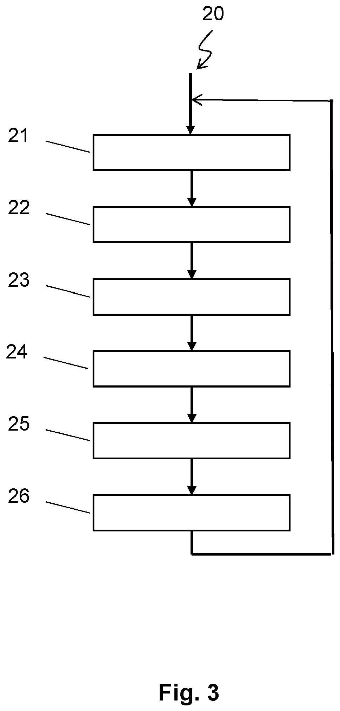

In **Fig. 3** findet sich ein schematisches Flussdiagramm 20 für das vorliegend vorgeschlagene Übertragungsverfahren. Dieses wird vorliegend insbesondere aus Sicht eines Empfangsgeräts 2 beschrieben. Die entsprechenden Verfahrensweisen auf den sonstigen angeschlossenen Geräten, wie insbesondere auf der Steuerinstanzvorrichtung 3 sowie auf der zentralen Servervorrichtung 4, ergeben sich dabei sinngemäß.

Nach dem Einschalten des Empfangsgeräts 2 - bzw. in regelmäßigen Abständen, wie beispielsweise in Abständen von 30 Sekunden oder 1 Minute - wird zunächst von einer geeigneten Steuereinheit des Empfangsgeräts 2 (typischerweise handelt es sich um eine klassischen Rechnerarchitektur aus Prozessor, Datenbus, Massenspeicher - beispielsweise Festplatte oder SSD - und gegebenenfalls geeignete Peripherieschnittstellen) überprüft, ob Zugang zum Internet 6 besteht. Dies erfolgt durch eine Steuerungslogik, die beispielsweise in Form eines Softwareprogramms vorliegt. Besteht Zugang zum Internet 6, fragt das Empfangsgerät 2 von der Steuerinstanzvorrichtung 3 die dortigen Speichermittel 33 gespeicherten Metadaten ab (Schritt 21).

Insbesondere erhält das Empfangsgerät 2 dadurch Informationen, welche Mediadateien in dem lokalen Speichermittel 13 (Massenspeicher) des Empfangsgeräts 2 herunterzuladen sind, und gegebenenfalls ob für den Herunterladevorgang (Downloadvorgang) eine Priorität (und gegebenenfalls welche) besteht. Basierend auf diesen Informationen ermittelt die lokale Steuereinheit des Empfangsgeräts 2, ob gegebenenfalls schon Teile der herunterzuladen Mediadateien oder sogar schon vollständige Mediadateien der herunterzuladen Mediadateien lokal (im Speichermittel 13 eines oder mehrerer anderer Empfangsgeräte 2) vorliegen. Hiermit ermittelt es die noch aus dem Netzwerk 6 herunterzuladenden vollständigen Mediadateien bzw. die noch erforderlichen Teile von Mediadateien (Schritt 22).

Weiterhin enthalten die Metadaten Informationen darüber, wo die betreffenden (Teile von) Mediadateien zu finden sind, also auf welcher zentralen Servervorrichtung 4 (bzw. welchen zentralen Servervorrichtungen 4) und/oder auf welchem dezentralen Empfangsgerät 2 bzw. welchen dezentralen Empfangsgeräten 2 die betreffenden Daten zu finden sind. Anschließend stößt es einen Herunterladevorgang der entsprechenden Dateipakete an (Schritt 23).

Hierbei findet insbesondere die Priorität der herunterzuladenden Mediadateien, deren Verfügbarkeit, aber auch die Position der betreffenden Datenpakete innerhalb der vollständigen, herunterzuladenden Mediadatei Berücksichtigung. Üblicherweise ist es sinnvoll, dass zunächst der Anfang einer Mediadatei heruntergeladen wird, insbesondere dann, wenn die betreffende Mediadatei eine erhöhte Priorität zum Herunterladen hat.

In Laufe des Herunterladevorgangs bzw. der Herunterladevorgänge sendet das Empfangsgerät 2 regelmäßige Statusinformationen an die Steuerinstanzvorrichtung 3 (Schritt 24). Diese Statusinformationen betreffen beispielsweise den Herunterladefortschritt, also insbesondere, wie viel Prozent der betreffenden Mediadatei bereits heruntergeladen wurde, aber auch gegebenenfalls welche Teile der betreffenden Mediadatei heruntergeladen wurden. Eine weitere Statusinformation kann im Übrigen darin bestehen, der Steuerinstanzvorrichtung 3 mitzuteilen, dass das betreffende Empfangsgerät 2 grundsätzlich verfügbar ist, welche IP-Adresse dem Empfangsgerät 2 aktuell zugewiesen ist, und welche Mediadateien (bzw. welche Teile hiervon) im lokalen Speicher (Massenspeicher) des Empfangsgeräts 2 vorhanden sind, und die damit für Anfragen von anderen Empfangsgeräten 2 zur Verfügung stehen (Schritt 25).

In einem nächsten Schritt 26 wird überprüft, ob andere Empfangsgeräte 2 Daten vom lokalen Empfangsgerät 2 abfragen. Auf eine entsprechende Anfrage hin werden die betreffenden Daten über den externen Netzwerkanschluss 11 und das Internet 6 an das anfragende Empfangsgerät 2 gesendet (Schritt 26). Ob solche Daten gesendet werden, kann davon abhängen, ob in den heruntergeladenen Metadaten eine entsprechende Berechtigung des anfragenden Empfangsgeräts 2 vermerkt ist.

Diese Abfolge von Arbeitsschritten wird zyklisch und vom Prinzip her zeitlich unlimitiert wiederholt. Selbstverständlich können die Schritte auch (teilweise) parallel zueinander ausgeführt werden (Multitasking), was bei heutigen Computersystemen die Regel ist.

Aufgrund des regelmäßigen Aussendens von Statusinformationen an die Steuerinstanzvorrichtung 3 (Schritt 24) sind die in der Steuerinstanzvorrichtung 3 hinterlegten Metadaten weitgehend aktuell. Anbieter, Empfänger, sowie weitere interessierte Personen können somit über eine entsprechende App mittels eines Smartphones 7 den aktuellen Downloadstatus für bestimmte Mediadateien abfragen. Dabei ist es nicht notwendig, dass sich diese an einem bestimmten Ort befinden. Vielmehr kann die Abfrage grundsätzlich von einem beliebigen Ort aus, und insbesondere auch mobil erfolgen.

Ebenfalls können auf diesem Weg (gegebenenfalls auch über feststehende Computer und/oder extrem breitbandige Datenleitungen) neue Aufträge in die Steuerinstanzvorrichtung 3 und/oder neue Mediadaten in die zentrale Servervorrichtung 4 eingespeist werden.

Durch die regelmäßige Abfrage der jeweils aktuellen Metadaten (Schritt 21) kann die Herunterladestrategie vom Empfangsgerät 2 jeweils angepasst und optimiert werden. Dies betrifft nicht nur die Frage, welche Daten/Mediadateien aktuell herunterzuladen sind (dies kann sich durch neu eingestellte Aufträge, bzw. durch geänderte Prioritäten durchaus ändern), sondern auch von wo diese erhältlich sind. Durch geeignete Algorithmen kann dadurch insbesondere der Datenverkehr der zentralen Servervorrichtung 4 erheblich reduziert werden, was erhebliche Kostenvorteile mit sich bringen kann.

Weiterhin kann hierdurch eine gewisse Redundanz realisiert werden. Fällt beispielsweise die zentrale Servervorrichtung 4 und/oder die Steuerinstanzvorrichtung 3 für einen gewissen Zeitraum aus, so können die bereits begonnenen bzw. geplanten Herunterladevorgänge basierend auf den im lokalen Speichermittel 13 des Empfangsgeräts 2 gespeicherten Metadaten fortgesetzt werden. Eine Fortführung des Herunterladevorgangs in einer zeitlichen Größenordnung von 10 Minuten und mehr ist damit ohne weiteres möglich.

Weiterhin kann - wenn die Metadaten zu stark veraltet sind - basierend auf der Information, welche Empfangsgeräte 2 zum Mediadatenübertragungsnetzwerk 1 gehören, und unter welcher IP-Adresse diese erreichbar sind, nötigenfalls auch eine Blindanfrage an sämtliche erreichbare Empfangsgeräte 2 gesendet werden, und der Herunterladevorgang gegebenenfalls auch danach fortgeführt werden.

In diesem Zusammenhang ist darauf hinzuweisen, dass normale Endanschlüsse beim Internet (und damit die meisten der Empfangsgeräte 2) aufgrund von Zwangstrennungen keine fixe IP-Adresse aufweisen. Vielmehr ändert sich die IP-Adresse typischerweise einmal täglich. Demgegenüber ist es stark vorteilhaft, wenn die Steuerinstanzvorrichtung 3 sowie die zentrale Servervorrichtung 4 eine dauerhafte IP-Adresse aufweisen. Dies ist jedoch bei Rechenzentren üblicherweise ohnehin der Fall.

## Patentansprüche

1. Verfahren (20) zur Übertragung von Mediadateien von zumindest einer zentralen Servervorrichtung (4) auf eine Mehrzahl von Empfangsgeräten (2) über ein digitales Netzwerk (6),
- wobei die Mehrzahl der Empfangsgeräte (2) jeweils ein Speichermittel (13) zur Speicherung von Mediadateien aufweist,
- wobei zumindest eine zentrale Steuerinstanzvorrichtung (3) vorgesehen ist, welche ein Speichermittel (33) zur Speicherung von Metadaten der zu übertragenden Mediadateien aufweist,
- wobei die Empfangsgeräte (2) zumindest vor der Übertragung von Mediadateien die Metadaten der Mediadateien von der zentralen Steuerinstanzvorrichtung (3) herunterladen,
- und basierend auf den Metadaten eine Übertragung der zu übertragenen Mediadateien von zumindest einer der zentralen Servervorrichtungen (4) und/oder von zumindest einem anderen der Empfangsgeräte (2) initiieren, und wobei die Empfangsgeräte (2) im Laufe der Übertragung der Mediadateien Statusinformationen an die zentrale Steuerinstanzvorrichtung (3) senden, die von der zentralen Steuerinstanzvorrichtung (3) dazu verwendet werden, die im Speichermittel (33) der zentralen Steuerinstanzvorrichtung (3) gespeicherten Metadaten zu aktualisieren, wobei
die Metadaten Informationen darüber umfassen, welche der Mediadateien an welches Empfangsgerät oder an welche Empfangsgeräte (2) zu übertragen sind,
wobei die Mediadateien Digital Cinema Packages, DCPs, sind.

2. Verfahren (20) nach Anspruch 1, wobei die Metadaten zudem Informationen umfassen, welche der folgenden Gruppe entnommen sind:
- Informationen bezüglich einer Übertragungspriorität der zu übertragenen Mediadateien;
- Informationen bezüglich eines Übertragungsfortschritts einer in der Übertragung befindlichen Mediadatei und/oder einer Übertragungsgeschwindigkeit einer in der Übertragung befindlichen Mediadatei und/oder einer geschätzten Restübertragungsdauer für die Übertragung einer in der Übertragung befindlichen Mediadatei;
- Informationen bezüglich einer Warteschlangenposition einer zu übertragenden Mediadatei und/oder;
- Informationen bezüglich der Empfangsgeräte (2), welche am Verfahren zur Übertragung von Mediadateien teilnehmen und/oder hierzu berechtigt sind;
- Informationen bezüglich der Empfangsgeräte (2), welche zumindest Teile der zu übertragenen Mediadateien in ihrem Speichermittel (13) gespeichert haben, und insbesondere Informationen darüber, welche Teile der zu übertragenden Mediadateien im Speichermittel (13) der jeweiligen Empfängergeräte (2) gespeichert sind;
- Informationen bezüglich des Abschlusses der Übertragung einer Mediadatei;
- Informationen darüber, welche Mediadateien von welchen Empfangsgeräten (2) zu löschen sind.

3. Verfahren (20) nach Anspruch 1 oder 2, wobei die zumindest eine zentrale Steuerinstanzvorrichtung (3) mittels Smartphones (7), Tablet-Computern, Computern oder portablen Computern aus der Entfernung über das digitale Netzwerk (6) angesteuert werden kann und/oder die im Speichermittel (33) der Steuerinstanzvorrichtung (3) befindlichen Metadaten mittels Smartphones (7), Tablet-Computern, Computern oder portablen Computern aus der Entfernung über das digitale Netzwerk (6) ausgelesen werden können.

4. Verfahren (20) nach einem der vorangehenden Ansprüche, **dadurch gekennzeichnet, dass** die Empfangsgeräte (2) die Metadaten der Mediadateien wiederholend von der zentralen Steuerinstanzvorrichtung (3) herunterladen, insbesondere auch während einer laufenden Übertragung von Mediadateien.

5. Verfahren (20) nach einem der vorangehenden Ansprüche, **dadurch gekennzeichnet, dass** die Empfangsgeräte (2) bei der Übertragung von Mediadateien die Anfänge der betreffenden Mediadateien priorisieren, insbesondere für Mediadateien, welche mit einer Priorität zu übertragen sind.

6. Verfahren (20) nach einem der Ansprüche 1 bis 4, **dadurch gekennzeichnet, dass** die Empfangsgeräte (2) bei der Übertragung von Mediadateien die Enden der betreffenden Mediadateien zuerst übertragen, insbesondere für Mediadateien, welche mit einer sehr niedrigen oder keiner Priorität zu übertragen sind, wobei die Empfangsgeräte (2) basierend auf den Metadaten eine Übertragung der zu übertragenen Mediadateien von zumindest einem anderen der Empfangsgeräte (2) initiieren.

7. Verfahren (20) nach einem der vorangehenden Ansprüche, wobei es sich bei der zumindest einen zentralen Steuerinstanzvorrichtung (3) und/oder der zumindest einen zentralen Servervorrichtung (4) um ein redundantes System handelt, derart, dass bei einem Teilausfall des jeweiligen Systems (3, 4) die Funktionalität des Systems (3, 4) von dessen Restkomponenten übernommen werden kann.

## Claims

1. Method (20) for transmitting media files from at least one central server device (4) to a plurality of receiving devices (2) via a digital network (6),
- wherein the plurality of the receiving devices (2) each comprises a storage means (13) for storing media files,
- wherein at least one central control instance device (3) is provided, which comprises a storage means (33) for storing metadata of the media files to be transmitted,
- wherein the receiving devices (2), at least prior to the transmission of media files, download the metadata of the media files from the central control instance device (3),
- and, based on the metadata, initiate a transmission of the media files to be transmitted from at least one of the central server devices (4) and/or from at least one other of the receiving devices (2),
and wherein the receiving devices (2) send status information to the central control instance device (3) during the transmission of the media files, said status information being used by the central control instance device (3) to update the metadata stored in the storage means (33) of the central control instance device (3),
wherein
the metadata comprises information regarding which of the media files are to be transmitted to which receiving device or to which receiving devices (2),
wherein
the media files are digital cinema packages, DCPs.

2. Method (20) in accordance with claim 1, wherein the metadata further comprises information selected from the following group:
- Information regarding transmission priority of the media files to be transmitted;
- Information regarding transmission progress of a media file currently in transmission and/or a transmission speed of a media file currently in transmission and/or an estimated remaining transmission duration for the transmission of a media file currently in transmission;
- Information regarding a queue position of a media file to be transmitted and/or;
- Information regarding the receiving devices (2) which participate in the method for transmitting media files and/or are authorized for this purpose;
- Information regarding the receiving devices (2) which have at least parts of the media files to be transmitted stored in their storage means (13) and, in particular, information regarding which parts of the media files to be transmitted are stored in the storage means (13) of the respective receiving devices (2);
- Information regarding the completion of the transmission of a media file;
- Information regarding which media files are to be deleted from which receiving devices (2).

3. Method (20) in accordance with claim 1 or 2, wherein the at least one central control instance device (3) can be controlled remotely via the digital network (6) by means of smartphones (7), tablet computers, computers, or portable computers, and/or the metadata located in the storage means (33) of the control instance device (3) can be read out remotely via the digital network (6) by means of smartphones (7), tablet computers, computers, or portable computers.

4. Method (20) in accordance with any of the preceding claims, **characterized in that** the receiving devices (2) repeatedly download the metadata of the media files from the central control instance device (3), in particular also during an ongoing transmission of media files.

5. Method (20) in accordance with any of the preceding claims, **characterized in that**, during the transmission of media files, the receiving devices (2) prioritize the starts of the respective media files, in particular in the case of media files that are to be transmitted with priority.

6. Method (20) in accordance with any of claims 1 to 4, **characterized in that**, during the transmission of media files, the receiving devices (2) transmit the ends of the respective media files first, in particular in the case of media files that are to be transmitted with very low priority or no priority, wherein the receiving devices (2), based on the metadata, initiate transmission of the media files to be transmitted from at least one other of the receiving devices (2).

7. Method (20) in accordance with any of the preceding claims, wherein the at least one central control instance device (3) and/or the at least one central server device (4) is a redundant system, such that, in the event of a partial failure of the respective system (3, 4), the functionality of the system (3, 4) can be assumed by its remaining components.

## Revendications

1. Procédé (20) de transmission de fichiers multimédias depuis au moins un dispositif serveur central (4) vers une pluralité de dispositifs récepteurs (2) via un réseau numérique (6),
- dans lequel chacun de la pluralité de dispositifs récepteurs (2) comprend un moyen de stockage (13) pour le stockage de fichiers multimédias,
- dans lequel au moins un dispositif d'instance de commande central (3) est prévu, qui comprend un moyen de stockage (33) pour le stockage de métadonnées des fichiers multimédias à transmettre,
- dans lequel les dispositifs récepteurs (2) téléchargent les métadonnées des fichiers multimédias depuis le dispositif d'instance de commande central (3), au moins avant la transmission des fichiers multimédias,
- et, sur la base des métadonnées, initient une transmission des fichiers multimédias à transmettre depuis au moins l'un parmi les dispositifs serveurs centraux (4) et/ou depuis au moins un autre dispositif parmi les dispositifs récepteurs (2),
et dans lequel les dispositifs récepteurs (2) envoient des informations d'état au dispositif d'instance de commande central (3) pendant la transmission des fichiers multimédias, lesdites informations d'état sont utilisées par le dispositif d'instance de commande central (3) pour mettre à jour les métadonnées stockées dans le moyen de stockage (33) du dispositif d'instance de commande central (3),
dans lequel
les métadonnées comprennent des informations concernant quels fichiers multimédias doivent être transmis vers quel dispositif récepteur ou vers quels dispositifs récepteurs (2),
dans lequel
les fichiers multimédias sont des paquets de cinéma numériques, DCP.

2. Procédé (20) selon la revendication 1, dans lequel les métadonnées comprennent en outre des informations sélectionnées dans le groupe suivant :
- des informations concernant la priorité de transmission des fichiers multimédias à transmettre ;
- des informations concernant une progression de transmission d'un fichier multimédia en cours de transmission et/ou une vitesse de transmission d'un fichier multimédia en cours de transmission et/ou une durée de transmission restante estimée pour la transmission d'un fichier multimédia en cours de transmission ;
- des informations concernant une position en file d'attente d'un fichier multimédia à transmettre, et/ou ;
- des informations concernant les dispositifs récepteurs (2) qui participent au procédé de transmission de fichiers multimédias et/ou sont autorisées pour ce faire ;
- des informations concernant les dispositifs récepteurs (2) qui possèdent au moins des parties des fichiers multimédias à transmettre stockées dans leurs moyens de stockage (13) et, en particulier, des informations concernant quelles parties des fichiers multimédias à transmettre sont stockées dans les moyens de stockage (13) des dispositifs récepteurs respectifs (2) ;
- des informations concernant l'achèvement de la transmission d'un fichier multimédia ;
- des informations concernant quels fichiers multimédias doivent être supprimés de quels dispositifs récepteurs (2).

3. Procédé (20) selon la revendication 1 ou 2, dans lequel l'au moins un dispositif d'instance de commande central (3) peut être commandé à distance via le réseau numérique (6) au moyen de téléphones intelligents (7), de tablettes, d'ordinateurs ou d'ordinateurs portables, et/ou les métadonnées se trouvant dans le moyen de stockage (33) du dispositif d'instance de commande (3) peuvent être lues à distance via le réseau numérique (6) au moyen de téléphones intelligents (7), de tablettes, d'ordinateurs ou d'ordinateurs portables.

4. Procédé (20) selon l'une des revendications précédentes, **caractérisé en ce que** les dispositifs récepteurs (2) téléchargent de façon répétitive les métadonnées des fichiers multimédias depuis le dispositif d'instance de commande central (3), en particulier également pendant une transmission de fichiers multimédias en cours.

5. Procédé (20) selon l'une des revendications précédentes, **caractérisé en ce que**, pendant la transmission de fichiers multimédias, les dispositifs récepteurs (2) priorisent les débuts des fichiers multimédias respectifs, en particulier dans le cas de fichiers multimédias qui doivent être transmis en priorité.

6. Procédé (20) selon l'une des revendications 1 à 4, **caractérisé en ce que**, pendant la transmission de fichiers multimédias, les dispositifs récepteurs (2) transmettent d'abord les fins des fichiers multimédias respectifs, en particulier dans le cas de fichiers multimédias qui doivent être transmis avec une très faible priorité ou sans priorité, dans lequel, sur la base des métadonnées, les dispositifs récepteurs (2) initient la transmission des fichiers multimédias à transmettre depuis au moins un autre dispositif parmi les dispositifs récepteurs (2).

7. Procédé (20) selon l'une des revendications précédentes, dans lequel l'au moins un dispositif d'instance de commande central (3) et/ou l'au moins un dispositif serveur central (4) est un système redondant, de telle sorte que, en cas de défaillance partielle du système respectif (3, 4), la fonctionnalité du système (3, 4) peut être prise en charge par ses composants restants.
